# EUROPEAN PATENT APPLICATION

(11) **EP 3 435 036 A1**
(43) Date of publication of application: **30.01.2019**
(21) Application number: 16895540.9
(22) Date of filing: 22.12.2016
(51) Int. Cl.: G01C 21/36, G01C 21/26, G06F 3/0481, G08G 1/005, G09B 29/00, G09B 29/10, H04N 5/64

(54) **SPECTACLE-TYPE WEARABLE INFORMATION TERMINAL, AND CONTROL METHOD AND CONTROL PROGRAM FOR SAME**

(30) Priority: 23.03.2016 JP 2016058018
(71) Applicant: NEC Corporation, Tokyo 108-8001 (JP)
(72) Inventor: KITADA, Masato, Tokyo 108-8001 (JP)
(74) Representative: Vossius & Partner Patentanwälte Rechtsanwälte mbB
(86) International application number: PCT/JP2016/088308
(87) International publication number: WO 2017/163517

(57) **Abstract**

This invention provides an eyeglasses-type wearable information terminal including a position detector that detects a position, and a display controller that displays a map image for guidance to a destination to perform display suitable for a current situation during guidance to the destination. Here, as a characteristic feature, the display controller changes the transmittance of display of the map image in accordance with the distance between a current place and a point to change a traveling direction. This makes it possible to reliably change the traveling direction at the point to change the traveling direction.

## Description

### CROSS REFERENCE TO RELATED APPLICATIONS

This application is based upon and claims the benefit of priority from Japanese patent application No. 2016-058018, filed on March 23, 2016, the disclosure of which is incorporated herein in its entirety by reference.

### TECHNICAL FIELD

The present invention relates to an eyeglasses-type wearable information terminal, a control method thereof, and a control program.

### BACKGROUND ART

In the above technical field, each of patent literatures 1 to 4 discloses a technique of controlling a display image on a wearable terminal and other terminals.

### CITATION LIST

### PATENT LITERATURE

Patent literature 1: Japanese Patent Laid-Open No. 2015-213226
Patent literature 2: Japanese Patent Laid-Open No. 2015-125464
Patent literature 3: Japanese Patent Laid-Open No. 2012-079138
Patent literature 4: Japanese Patent Laid-Open No. 2011-030116

### SUMMARY OF THE INVENTION

### TECHNICAL PROBLEM

However, the technique described in each literature is not a technique of performing display suitable for a current situation during guidance to a destination.

The present invention enables to provide a technique of solving the above-described problem.

### SOLUTION TO PROBLEM

One example aspect of the present invention provides an eyeglasses-type wearable information terminal comprising:
a position detector that detects a position; and
a display controller that displays a map image for guidance to a destination,
wherein the display controller changes a transmittance of the map image in accordance with a distance between a current place and a point to change a traveling direction.

Another example aspect of the present invention provides an information processing program for causing an eyeglasses-type wearable information terminal to execute a method, comprising:
detecting a position; and
displaying a map image for guidance to a destination,
wherein in the displaying, a transmittance of the map image is changed in accordance with a distance between a current place and a point to change a traveling direction.

Still other example aspect of the present invention provides an information processing program for causing an eyeglasses-type wearable information terminal to execute a method comprising:
detecting a position; and
displaying a map image for guidance to a destination,
wherein in the displaying, a transmittance of the map image is changed in accordance with a distance between a current place and a point to change a traveling direction.

### ADVANTAGEOUS EFFECTS OF INVENTION

According to the present invention, it is possible to perform display suitable for a current situation during guidance to a destination.

### BRIEF DESCRIPTION OF DRAWINGS

Fig. 1 is a block diagram showing the arrangement of an eyeglasses-type wearable information terminal according to the first example embodiment of the present invention;
Fig. 2 is a block diagram showing the arrangement of an eyeglasses-type wearable information terminal according to the second example embodiment of the present invention;
Fig. 3 is a flowchart showing the procedure of processing of the eyeglasses-type wearable information terminal according to the second example embodiment of the present invention;
Fig. 4 is a view for explaining the processing of the eyeglasses-type wearable information terminal according to the second example embodiment of the present invention;
Fig. 5 is a view for explaining the processing of the eyeglasses-type wearable information terminal according to the second example embodiment of the present invention;
Fig. 6 is a view for explaining the processing of the eyeglasses-type wearable information terminal according to the second example embodiment of the present invention;
Fig. 7 is a view for explaining the processing of the eyeglasses-type wearable information terminal according to the second example embodiment of the present invention; and
Fig. 8 is a view for explaining the processing of the eyeglasses-type wearable information terminal according to the second example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

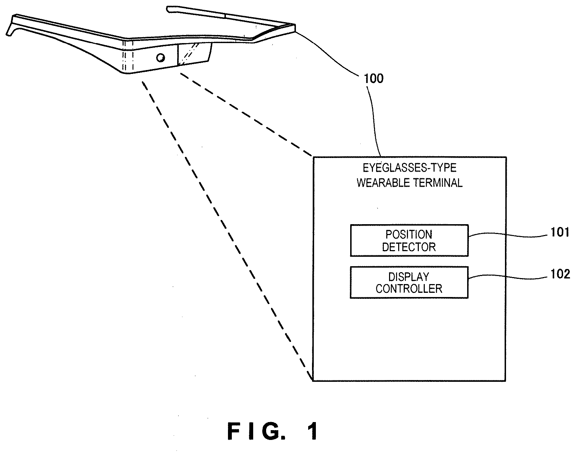

An eyeglasses-type wearable information terminal 100 according to the first example embodiment of the present invention will be described with reference to Fig. 1. The eyeglasses-type wearable information terminal 100 is a device having a function of performing guidance from a current place to a destination.

As shown in Fig. 1, the eyeglasses-type wearable information terminal 100 includes a position detector 101 and a display controller 102.

The position detector 101 detects a current position. The display controller 102 displays a map image used to perform guidance from the position acquired by the position detector 101 to a destination. The display controller 102 changes the transmittance of the map image in accordance with the distance between the current place detected by the position detector 101 and a point to change a traveling direction. For example, if the current position is located on a road to linearly travel and is far apart from a corner to turn, the map image is displayed at a high transmittance to make it easy to see the road. In addition, as the current place approaches the corner to turn, the display controller 102 displays the map image at a low transmittance to make it easy to see the map image.

According to the above-described arrangement, it is possible to perform map display suitable for a current situation during guidance to a destination.

### [Second Example Embodiment]

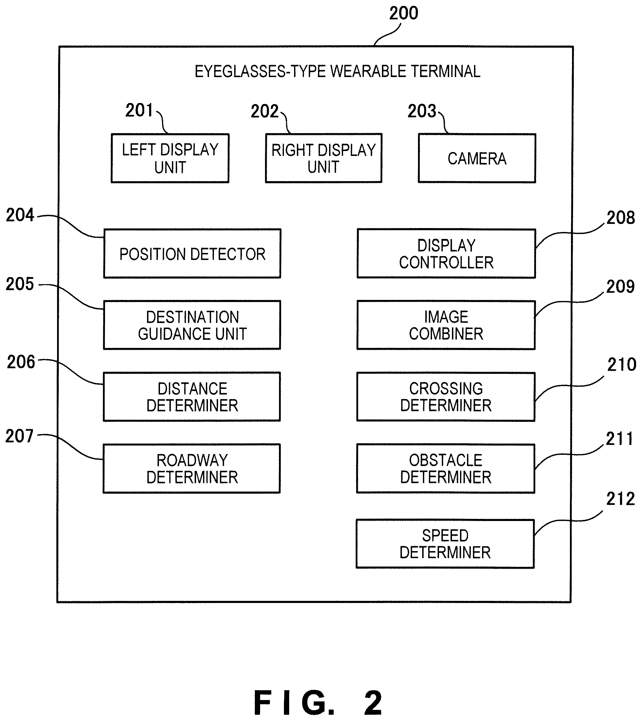

An eyeglasses-type wearable information terminal 200 according to the second example embodiment of the present invention will be described next with reference to Fig. 2. Fig. 2 is a block diagram for explaining the functional arrangement of the eyeglasses-type wearable information terminal 200 according to this example embodiment.

The eyeglasses-type wearable information terminal 200 includes left and right display units 201 and 202, a camera 203, a position detector 204, a destination guidance unit 205, a distance determiner 206, a roadway determiner 207, and a display controller 208. In addition, the eyeglasses-type wearable information terminal 200 further includes an image combiner 209, a crossing determiner 210, an obstacle determiner 211, and a speed determiner 212.

The camera 203 is provided on the eyeglasses-type wearable information terminal and acquires an image including the visual field of a user. Here, a plurality of cameras 203 may be provided on the eyeglasses-type wearable information terminal 200. When the plurality of cameras 203 exist, for example, the first camera is placed at a position where a range recognizable by the right eye of the user can be captured, and the second camera is placed at a position where a range recognizable by the left eye of the user can be captured. For example, the first camera can be placed on the right temple portion of the wearable terminal 200, and the second camera can be placed on the left temple portion of the wearable terminal 200.

The position detector 204 can be configured to acquire current position information from a GPS (Global Positioning System).

The destination guidance unit 205 acquires the information of the position acquired by the position detector 204, the information of a destination whose input is accepted from the user, and map information. The destination guidance unit 205 generates a route for the guidance to the destination based on the information of the position, the information of the destination whose input is accepted from the user, and the map information. As a route generation method, a known method can be used.

The distance determiner 206 determines a distance between the current place and a point to change the traveling direction. More specifically, the distance determiner 206 acquires the information of the point to change the traveling direction based on the route generated by the destination guidance unit 205. The distance determiner 206 calculates the distance from the current position to the nearest point to change the traveling direction on the route based on the acquired information of the position to change the traveling direction and the information of the current position.

Based on the route generated by the destination guidance unit 205, the roadway determiner 207 acquires information concerning the presence/absence of a road along the roadway on the route and the place of the road along the roadway. Based on the information of the current position and the information concerning the presence/absence of a road along the roadway on the route and the place of the road along the roadway, the roadway determiner 207 detects on which one of the left side and the right side of the current position the roadway is located.

The display controller 208 controls the left and right display units 201 and 202. More specifically, the display controller 208 executes control to display a map image generated by the image combiner 209 on one or both of the left and right display units 201 and 202. In addition, the display controller 208 controls the transmittance displayed on the left and right display units 201 and 202.

The image combiner 209 combines images acquired by the plurality of cameras 203 into one image.

The crossing determiner 210 determines whether the user who wears the eyeglasses-type wearable information terminal 200 is crossing the road. More specifically, the crossing determiner 210 can be configured to acquire the position information of a crosswalk from the map information and determine, based on the acquired position information of the crosswalk and the information of the current position, whether the user is crossing.

The obstacle determiner 211 may be configured to determine whether an obstacle exists on the route generated by the destination guidance unit 205 or may be configured to detect an obstacle by analyzing the images acquired by the cameras 203.

The speed determiner 212 can be configured to determine the speed based on the output value of an acceleration sensor or can be configured to detect the speed using the reception information of the GPS. The eyeglasses-type wearable information terminal 200 further includes an operation unit that accepts a user operation. The operation unit does not accept a user operation in a case in which an obstacle exists ahead, in a case in which the user is moving on an intersection, or in a case in which the user is moving at a predetermined speed or more.

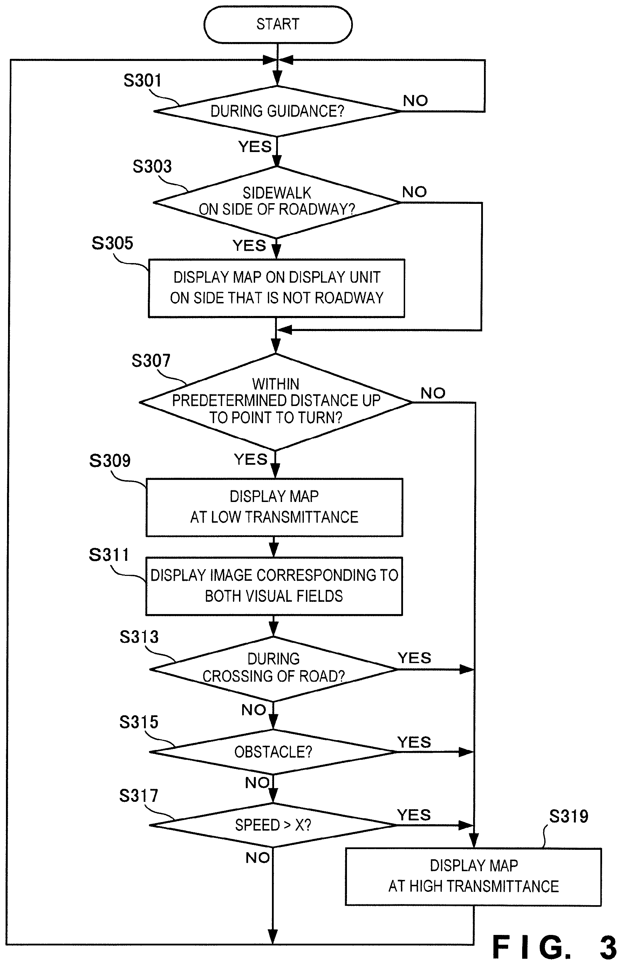

Fig. 3 is a flowchart showing the procedure of processing of the eyeglasses-type wearable information terminal 200.

First, in step S301, the destination guidance unit 205 calculates a route up to a destination input from the user. The destination guidance unit 205 determines whether the user is being guided in accordance with the calculated route. If the user is being guided, the process advances to step S303.

Next, when the process advances to step S303, the roadway determiner 207 determines whether a current position detected by the position detector 204 exists on a sidewalk along a roadway. If the user is walking on a sidewalk along a roadway, the process advances to step S305.

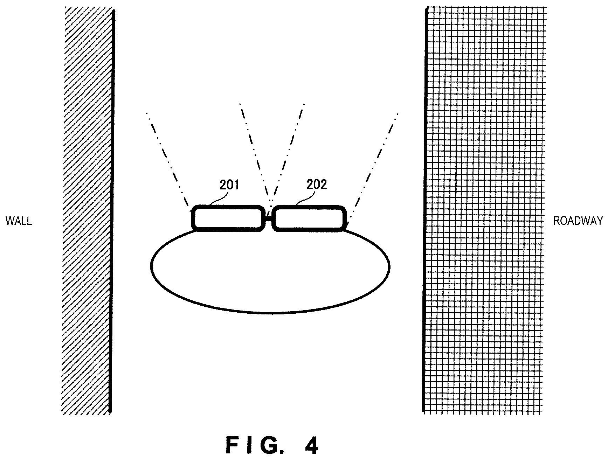

Next, when the process advances to step S305, the display controller 208 displays a map image on a display unit of the left and right display units 201 and 202 on a side that is not the roadway. For example, in the case of Fig. 4, the map image is displayed on the display unit 201 on the left side, thereby ensuring the visual field on the roadway side. Here, the display controller 208 can also inhibit display on the display unit on the roadway side of the left and right display units 201 and 202.

Next, when the process advances to step S307, the distance determiner 206 determines the distance between the current place and a point to change the traveling direction. If the determined distance is a predetermined distance or more, the process advances to step S319.

Next, when the process advances to step S319, the display controller 208 displays the map image at a high transmittance to make it easy to see ahead. At this time, as the high transmittance, for example, a transmittance of 80% can be set, or a transmittance of 100% may be set. If the transmittance is 100%, the map image is not displayed. Here, the high transmittance can also be set by the user. On the other hand, if the distance from the point to change the traveling direction is less than the predetermined distance, the process advances to step S309.

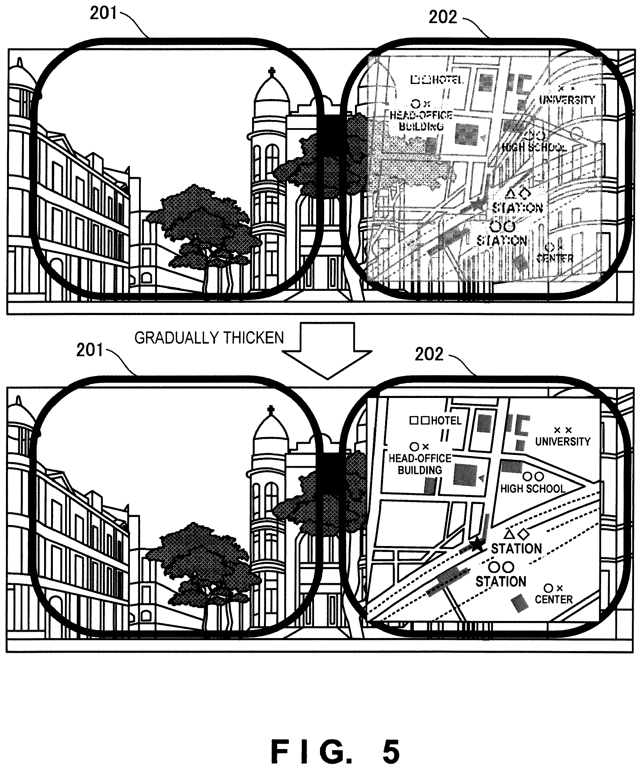

When the process advances to step S309, the display controller 208 displays the map image with a low transmittance on the display unit on which the map image is displayed to make it easy to see the map image. For example, if a transmittance of 0% is set, the visual field ahead is obstructed, and the map image is clearly displayed. Fig. 5 shows the states of the display screens of the display units viewed from the user. As the user approaches a corner, the transmittance may gradually be lowered, and the map image may be displayed thick. Accordingly, the user can immediately determine where is the point to change the traveling direction and can be prevented from making a failure to pass by the corner. In addition, when the transmittance is gradually changed, it is possible to prevent the visual field of the user from being suddenly obstructed.

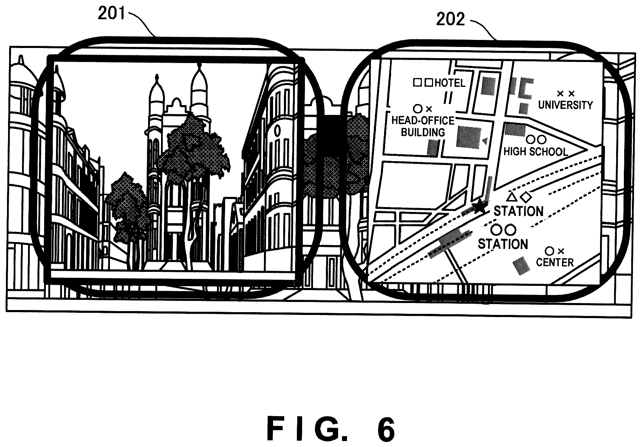

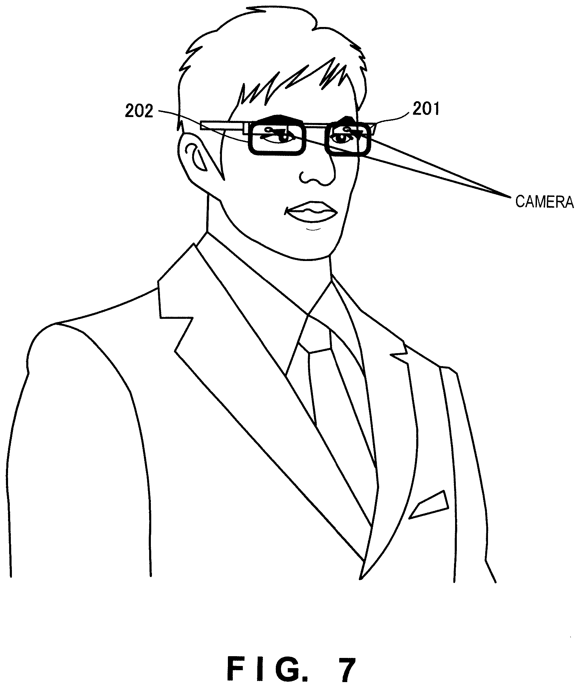

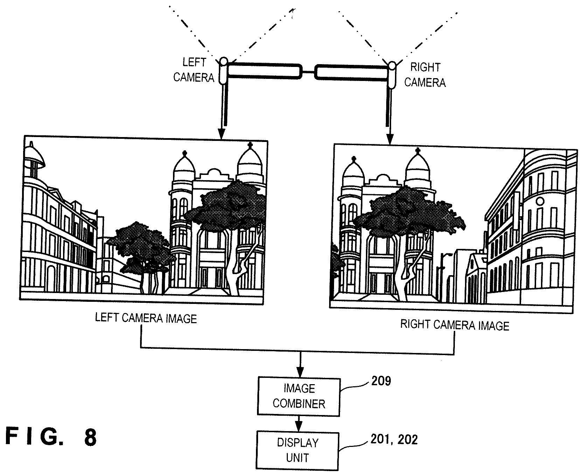

Next, when the process advances to step S311, as shown in Fig. 6, the display controller 208 displays images corresponding to both visual fields on the display unit of the left-side display unit 201 and the right-side display unit 202 on which the map image is not displayed. This step is optional processing in a case in which the cameras 203 are provided on both of the left and right sides, as shown in Fig. 7. It is also possible to combine images captured by the right camera and the left camera by the image combiner 209, as shown in Fig. 8, and display the image on one display unit on which the map image is not displayed, as shown in Fig. 6. This makes it possible to ensure the whole visual field ahead while viewing the map.

Referring back to Fig. 3, when the process advances to step S313, the crossing determiner 210 determines whether, for example, the user is crossing a road or approaching an intersection. In a situation in which the user is, for example, crossing a road or approaching an intersection, and the visual field ahead should be ensured, the process advances to step S319, and the display controller 208 displays the map image on one of the right-side display unit 201 and the left-side display unit 202 at a high transmittance to make it easy to see ahead.

If the user is not crossing a road, the process advances to step S315, and the obstacle determiner 211 determines the presence/absence of an obstacle ahead. In a situation in which an obstacle exists, and the visual field ahead should be ensured, the process advances to step S319, and the display controller 208 displays the map image on one of the right-side display unit 201 and the left-side display unit 202 at a high transmittance to make it easy to see ahead. For example, in a case in which an oncoming person exists, the person is determined as an obstacle, and the map is displayed thin. A person who is moving in the same way is not determined as an obstacle, and the map may be displayed clearly.

If there is no obstacle, the process advances to step S317, and the speed determiner 212 determines the traveling speed of the user. If the user is moving at a speed higher than a predetermined speed X, the process advances to step S319, and the display controller 208 displays the map image on one of the right-side display unit 201 and the left-side display unit 202 at a high transmittance (for example, 80% to 100%).

As described above, according to this example embodiment, it is possible to perform map display suitable for a current situation during guidance to a destination.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims.

The present invention is applicable to a system including a plurality of devices or a single apparatus. The present invention is also applicable even when an information processing program for implementing the functions of example embodiments is supplied to a memory of the system or apparatus directly or from a remote site. Hence, the present invention also incorporates the program installed in a computer to implement the functions of the present invention by a processor of the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. An eyeglasses-type wearable information terminal comprising:
a position detector that detects a position; and
a display controller that displays a map image for guidance to a destination,
wherein the display controller changes a transmittance of the map image in accordance with a distance between a current place and a point to change a traveling direction.

2. The eyeglasses-type wearable information terminal according to claim 1, wherein the display controller further displays the map image at a first transmission to make it easy to see ahead in a case in which the current place detected by the position detector is far apart from the point to change the traveling direction by not less than a predetermined distance, and displays the map image at a second transmission lower than the first transmission to make it easy to see the map image in a case in which the current place is far apart from the point to change the traveling direction by less than the predetermined distance.

3. The eyeglasses-type wearable information terminal according to claim 2, wherein even in the case in which the current place is far apart from the point to change the traveling direction by less than the predetermined distance, the display controller displays the map image at the first transmission in a case in which an obstacle exists ahead, in a case of moving on an intersection, or in a case of moving at not less than a predetermined speed.

4. The eyeglasses-type wearable information terminal according to claim 1, 2, or 3, further comprising a right-side display unit and a left-side display unit, and a right-side image capturing unit that captures a right front side and a left-side image capturing unit that captures a left front side,
wherein in a case in which the map image is displayed on one display unit of the right-side display unit and the left-side display unit, the display controller further displays, on the other display unit, images corresponding to both visual fields captured by the right-side image capturing unit and the left-side image capturing unit.

5. The eyeglasses-type wearable information terminal according to claim 1 or 2, further comprising a right-side display unit and a left-side display unit,
wherein in a case in which the current place detected by the position detector is a sidewalk along a roadway, the display controller further inhibits a display unit on a roadway side of the right-side display unit and the left-side display unit from displaying the map image.

6. The eyeglasses-type wearable information terminal according to claim 5, further comprising an operation unit that accepts a user operation,
wherein the operation unit does not accept the user operation in a case in which an obstacle exists ahead, in a case of moving on an intersection, or in a case of moving at not less than a predetermined speed.

7. A control method of an eyeglasses-type wearable information terminal, comprising:
detecting a position; and
displaying a map image for guidance to a destination,
wherein in the displaying, a transmittance of the map image is changed in accordance with a distance between a current place and a point to change a traveling direction.

8. An information processing program for causing an eyeglasses-type wearable information terminal to execute a method, comprising:
detecting a position; and
displaying a map image for guidance to a destination,
wherein in the displaying, a transmittance of the map image is changed in accordance with a distance between a current place and a point to change a traveling direction.
